# EUROPÄISCHE PATENTSCHRIFT

(11) **EP 0 539 761 B1**
(45) Veröffentlichungstag und Bekanntmachung des Hinweises auf die Patenterteilung: **02.05.1997**
(21) Anmeldenummer: 92116945.4
(22) Anmeldetag: 05.10.1992
(51) Int. Cl.: H04Q 11/04, H04M 3/24

(54) **Verfahren und Anordnung zum Feststellen eines gestörten, in einem Kanalbündel enthaltenen Kanals**
Method and system to detect a faulty channel within a channel group
Procédé et système pour détecter un canal défectueux entre un groupe de canaux

(30) Priorität: 31.10.1991 DE 4135952
(43) Veröffentlichungstag der Anmeldung: 05.05.1993
(73) Patentinhaber: Alcatel SEL Aktiengesellschaft, D-70435 Stuttgart (DE)
(72) Erfinder: Baur, Hugo, W-7000 Stuttgart 70 (DE)
(74) Vertreter: Brose, Gerhard, Dipl.-Ing.

(56) Entgegenhaltungen:
- EP-A- 0 171 803
- EP-A- 0 278 289
- DE-A- 3 513 181
- US-A- 4 059 729

## Beschreibung

Die Erfindung betrifft ein Verfahren zum Überprüfen eines Kanals, der am Eingang eines Netzknotens innerhalb eines Kanalbündels ankommt, nach dem Oberbegriff des Anspruchs 1, und einen Netzknoten zum Durchführen dieses Verfahrens, nach dem Oberbegriff des Anspruchs 2.

Kommunikationsnetze zur wahlfreien Verbindung zweier beliebiger (gleichartiger) Endgeräte sind allgemein bekannt. Sie weisen im wesentlichen Netzknoten, Endgeräte, Anschlußleitungen und Verbindungsleitungen auf. Jedes Endgerät ist über eine Anschlußleitung mit einem Netzknoten verbunden. Jeder Netzknoten ist direkt oder über zwischengeschaltete Netzknoten mit jedem anderen Netzknoten über mindestens eine Verbindungsleitung verbunden.

Die Verbindungen zwischen zwei Endgeräten laufen in Kanälen ab. Dabei sind auf einer Anschlußleitung nur wenige, für ein Endgerät oder die Endgeräte eines einzelnen Teilnehmers bestimmte Kanäle, oft nur ein einzelner Kanal vorhanden. Auf den Verbindungsleitungen dagegen ist jeweils ein ganzes Kanalbündel mit voneinander in der Regel unabhängigen Kanälen zusammengefaßt. Die Netzknoten ordnen die verschiedenen Kanäle einander entsprechend den aktuellen Verbindungswünschen zu und führen auch die Bündelung der Kanäle durch.

Als Kanal wird hier primär ein Übertragungsmedium für die Übertragung periodisch aufeinanderfolgender zusammengehöriger Datenwörter angesehen. Ein Kanalbündel ist dann ein synchrones Zeitmultiplexsystem, z.B. PCM 30/32, für die Übertragung mehrerer Datenströme, die in fest vorgegebener Folge datenwortweise ineinander verschachtelt sind. Die Erfindung ist aber genauso gut auf die Übertragung nicht periodisch anfallender Daten und auf andere Multiplexverfahren anwendbar, wobei dann beispielsweise Daten zu Datenpaketen oder Zellen zusammengefaßt und in virtuellen Kanälen im asynchronen Zeitmultiplex (ATM = asynchronous transfer mode) übermittelt werden.

In herkömmlichen Kommunikationsnetzen, insbesondere in Fernsprechnetzen, sind verschiedene Prüfmöglichkeiten bekannt:
- Die Leitungen werden in der Regel ständig als Ganzes auf Fehler und Ausfälle hin überprüft; bei Verbindungsleitungen werden damit Kanalbündel überprüft, bei Anschlußleitungen meist die Einzelkanäle.
- Zwischen Datenendgeräten, die in beiden Richtungen miteinander verbunden sind, erfolgen End-zu-End-Überprüfungen mit End-zu-End-Signalisierung.

Die meisten vermittelten Verbindungen sind derzeit von verhältnismäßig kurzer Dauer, so daß eine Überprüfung während der Verbindung wenig sinnvoll ist. Längerdauernde Verbindungen werden derzeit meist fest verschaltet (Standleitungen).

Für solche Standleitungen ist aus DE 35 13 181 A1 bekannt, auf Dauer und nahezu über die gesamte Länge der Leitung (abgesehen von nicht gemultiplexten Abschnitten) eine zweite Standleitung zu schalten und am Ausgang dieser zweiten Standleitung die über beide Stand leitungen übertragene Information auf Gleichheit zu überprüfen. Alleine aus den dort genannten kaufmännischen Gesichtspunkten ist eine derartige Verdoppelung von Leitungen allenfalls äußerst restriktiv anzuwenden.

Schon jetzt werden immer mehr längerdauernde Verbindungen im herkömmlichen Fernsprechnetz über Vermittlungen hergestellt und dann nach Art einer Standleitung betrieben. Andererseits sollen zukünftig Standleitungen immer weniger von Hand eingerichtet und geändert, sondern durch automatische Einrichtungen geschaltet werden. Solche Einrichtungen werden im Gegensatz zu herkömmlichen Vermittlungen oder vermittelnden Netzknoten einfach als Netzknoten bezeichnet. Ihre Tätigkeit, die letztlich unter den Oberbegriff "Vermitteln" (engl. switching) fällt, wird üblicherweise als "Schalten" (engl. cross connecting) bezeichnet. Die Begriffe "Netzknoten" und "Vermitteln" werden bei der Beschreibung der vorliegenden Erfindung jeweils im übergeordneten Sinn verwendet, weil einerseits die Erfindung allgemein anwendbar ist und andererseits keine klare Abgrenzung zwischen den Techniken möglich ist. Für die Überprüfung längerdauernder Verbindungen muß die Möglichkeit geschaffen werden, laufende Verbindungen und damit einzelne Kanäle nicht nur an den Enden, sondern auch in den Netzknoten zu überprüfen.

Aus US 4,059,729 ist bekannt, zu diesem Zweck in jede Zeitmultiplexleitung eine ausschließlich hierfür vorgesehene Einrichtung einzufügen, mittels derer auf jeden Einzelkanal zum Zwecke der Überprüfung zugegriffen werden kann. Abgesehen von diesen zusätzlichen Einrichtungen bedarf es dort noch eines zusätzlichen aufwendigen Netzwerks, um all diese Einrichtungen sowohl mit einer die Prüfungen steuernden Einrichtung als auch mit der eigentlichen Prüfeinrichtung zu verbinden. Dieser Zusatzaufwand sollte weitgehend reduziert werden.

Dies erfolgt erfindungsgemäß durch ein Verfahren nach Anspruch 1 und einen Netzknoten nach Anspruch 2.

Gemäß der Erfindung wird das Koppelfeld des Netzknotens kopierfähig ausgeführt. Soll ein Kanal überprüft werden, so wird dessen Inhalt kopiert und der kopierte Kanal wird einer Einzelkanalprüfeinrichtung zugeführt.

Bevorzugt wird als Einzelkanalprüfeinrichtung ein zwischen Aus- und Eingang kurzgeschlossener Einzelkanalanschluß verwendet, der geeignete Prüfeinrichtungen aufweist (Anspruch 3).

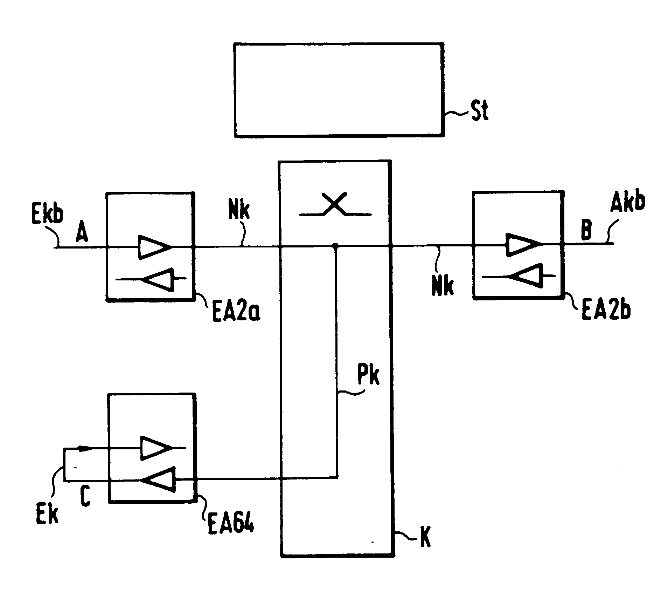

Im folgenden wird die Erfindung anhand eines Ausführungsbeispiels unter Zuhilfenahme der beiliegenden Zeichnung weiter erläutert. Die Zeichnung zeigt ein Koppelfeld K, zwei Ein- und Ausgangseinheiten für Kanalbündel, EA2a und EA2b, eine Ein- und Ausgangseinheit für einen Einzelkanal, EA64, und eine Steuereinheit St.

Die Ein- und Ausgangseinheiten sind symbolisch jeweils durch einen Verstärker in der einen Richtung und einen Verstärker in der anderen Richtung gekennzeichnet. Jeder Verstärker steht dabei stellvertretend für alles, was sich zwischen einer von außen kommenden oder nach außen gehenden Leitung und dem Koppelfeld selbst befindet. Hierzu können je nach verwendeter Bauform des Netzknotens Überspannungsableiter, Gabelschaltungen, Fernspeiseeinrichtungen, Multiplexer oder Demultiplexer, Kodewandler, Synchronisationseinrichtungen und dergleichen gehören. Im vorliegenden Fall wird insbesondere angenommen, wenn auch nicht zwingend vorausgesetzt, daß für die in Richtung Koppelfeld führende Leitung eine Prüfeinrichtung vorhanden ist, die die Fehlerhaftigkeit des ankommenden Signals oder eine im Signal enthaltene Fehlermeldung feststellen kann. Die Erfindung geht aber davon aus, daß die Prüfeinrichtungen in den Ein- und Ausgangseinheiten für Kanalbündel zwar Gesamtausfälle, nicht aber Ausfälle einzelner Kanäle erkennen kann. Auf einfache Weise kann beispielsweise festgestellt werden, wenn keine Synchronisierung mehr möglich ist oder wenn auf einer Leitung ständig derselbe Pegel anliegt, etwa ständig eine "Eins", die dem "alarm indication signal" (AIS) nach CCITT-Recommendation G.704 entspricht.

Die Ein- und Ausgangseinheiten haben weiter dafür zu sorgen, daß innerhalb des Koppelfeldes auf die Kanäle einzeln zugegriffen werden kann. Hierzu ist eine Anpassung an die innere Struktur des Koppelfeldes erforderlich. Dies erfolgt abhängig vom Aufbau des jeweiligen Netzknotens und ist von der vorliegenden Erfindung unabhängig.

Die zwei verschiedenen Arten von Ein- und Ausgangseinheiten, nämlich die für Kanalbündel, EA2a, EA2b, und die für einen Einzelkanal, EA64, dienen in der Regel unterschiedlichen Zwecken. Kanalbündel mit 32 Einzelkanälen und einer Übertragungskapazität von 2048 kbit/s dienen in erster Linie der Verbindung von Netzknoten untereinander, aber auch dem Anschluß größerer Teilnehmer. Einzelkanäle für 64 kbit/s dienen vor allem dem Anschluß der Endgeräte.

Weiter in der Figur eingezeichnet ist ein Datenweg von einem Eingangskanalbündel Ekb bei A über die Ein- und Ausgangseinheit für Kanalbündel EA2a durch das Koppelfeld K zur Ein- und Ausgangsgangseinheit für Kanalbündel EA2b zu einem Ausgangskanalbündel Akb bei B. Zwischen den Ein- und Ausgangseinheiten für Kanalbündel, EA2a und EA2b, ist dieser eine Datenweg als Nutzkanal Nk nur sehr symbolisch dargestellt. Von diesem Nutzkanal Nk zweigt nun im Koppelfeld K ein Prüfkanal Pk ab und führt zum Ausgangsteil der Ein- und Ausgangseinheit für einen Einzelkanal, EA64. Bei dieser Ein- und Ausgangseinheit ist der Ausgang des Ausgangsteils bei C mit dem Eingang des Eingangsteils durch eine Einzelkanalverbindung Ek direkt verbunden, beispielsweise durch softwaregesteuertes Schließen einer Prüfschleife oder mittels eines Kurzschlußbügels. Weist das Eingangsteil dieser Ein- und Ausgangseinheit nicht, wie angenommen bereits eine Prüfeinrichtung auf, so muß anstelle einer solchen Ein- und Ausgangseinheit eine separate Prüfeinrichtung vorgesehen werden, die in der Lage ist, die erforderliche Prüfung durchzuführen und in geeigneter Weise zu melden. Anstelle der zweiten Ein- und Ausgangseinheit für Kanalbündel, EA2b, könnte am Ende des Nutzkanals Nk auch eine zweite Ein- und Ausgangseinheit für einen Einzelkanal liegen, wenn der Nutzkanal von hier aus in einem Einzelkanal beispielsweise zu einem Endgerät führen soll.

An das Koppelfeld K sind zunächst diejenigen Anforderungen zu stellen, die zur Vermittlung der Nutzkanäle erforderlich sind. Die hierfür erforderlichen Koppelbausteine und Koppelnetzstrukturen sind ausreichend bekannt. Auch die erforderlichen, der Steuerung dienenden Strukturen und Elemente, die hier durch die Steuereinheit St dargestellt sind, sind ausreichend bekannt. Die vorliegende Erfindung ist auch anwendbar auf räumlich verteilte "Koppelfelder", wie z.B. LAN's sowie auf hierarchisch in Teilkoppelfelder unterteilte Koppelfelder, wobei für die einzelnen Teilkoppelfelder beispielsweise Kanalkapazitäten von 140 Mbit/s, 34 Mbit/s, 2 Mbit/s und 64 kbit/s infrage kommen. Die jeweils aufeinanderfolgenden Hierarchiestufen stehen sich dann im Sinne der vorliegenden Erfindung wie Kanalbündel und Einzelkanäle gegenüber.

Unabhängig davon, wie das Koppelnetz K und die Steuereinheit St aufgebaut sind, sind erfindungsgemäß solche Koppelbausteine zu verwenden und diese so anzusteuern, daß im Laufe einer bestehenden Verbindung zusätzlich zum Nutzkanal Nk ein davon abzweigender Prüfkanal Pk geschaltet werden kann.

Die Koppelbausteine, in der Figur als Punkt an der Abzweigungsstelle des Prüfkanals Pk vom Nutzkanal Nk dargestellt, müssen dazu in die Lage versetzt werden, einen Ausgang oder Ausgangskanal auch dann mit einem Eingang oder Eingangskanal zu verbinden, wenn bereits ein anderer Ausgang oder Ausgangskanal mit dem betreffenden Eingang oder Eingangskanal verbunden ist, d.h. den Inhalt eines Kanals zu kopieren. Innerhalb eines Koppelbausteins sind die erforderlichen Verbindungswege zwangsläufig schon vorhanden. Es muß nur noch dafür gesorgt werden, daß eine gleichzeitige Zuordnung zweier Ausgänge zu einem Eingang angesteuert werden kann. Für Konferenzverbindungen oder andere Punkt-zu-Mehrpunkt-Verbindungen ist dies bereits bekannt.

Im Vergleich mit Koppelfeldern, die Konferenzverbindungen oder andere Punkt-zu-Mehrpunkt-Verbindungen erlauben, sind allerdings gewisse Abweichungen zu berücksichtigen. Bei Punkt-zu-Mehrpunkt-Verbindungen sind Einschränkungen derart denkbar, daß diese nur in bestimmten Teilen des Koppelfelds möglich sind. Solche Einschränkungen sind unzulässig, wenn jeder durch das Koppelfeld führende Nutzkanal prüfbar sein soll. Die zusätzlich für den Prüfkanal benötigte Kapazität braucht aber, im Gegensatz zu Punkt-zu-Mehrpunkt-Verbindungen, nicht besonders berücksichtigt zu werden, da es nicht erforderlich ist, die zu prüfenden Nutzkanäle gleichzeitig zu prüfen. Es genügt hier vielmehr ein zeitliches Nacheinander.

Aus Zuverlässigkeitsgründen sollten allerdings zwei Prüfeinrichtungen, im Beispiel zwei Ein- und Ausgangseinheiten für einen Einzelkanal, vorhanden sein. Diese sollten dann so am Koppelfeld angeordnet sein, daß die möglichen Prüfkanäle sowie etwaige Meldekanäle zur Steuereinheit St nicht gleichzeitig von ein und derselben etwaigen Störung im Koppelfeld betroffen sein können. Im Normalfall können dann die beiden Prüfeinrichtungen getrennt, gesteuert durch die Steuereinheit, gemäß irgendeiner vorgegebenen Prüfstrategie, die verschiedenen Nutzkanäle nacheinander durchprüfen. Bei der Feststellung eines Fehlers könnte durch Umschalten auf die andere Prüfeinrichtung festgestellt werden, ob der Fehler wirklich im Nutzkanal oder in dem von diesem ausgehenden Prüfkanal liegt.

## Patentansprüche

1. Verfahren zum Überprüfen eines Kanals (Nk), der am Eingang eines Netzknotens innerhalb eines Kanalbündels (Ekb) ankommt und innerhalb des Netzknotens unabhängig von den anderen Kanälen des Kanalbündels vermittelt wird,
**dadurch gekennzeichnet,**
daß im Netzknoten für jeden aus einem Kanalbündel (Ekb) kommenden Kanal (Nk) eine Kopiermöglichkeit vorgesehen wird, daß der Inhalt eines zu prüfenden Kanals (Nk) kopiert wird und daß der Inhalt des kopierten Kanals (Pk) einer Einzelkanalprüfeinrichtung (EA64) zugeführt und dort geprüft wird.

2. Netzknoten mit einer Vielzahl von Eingängen für je ein Kanalbündel (Ekb), mit einer Vielzahl von Ausgängen für je ein Kanalbündel (Akb) und mit einem Koppelnetz (K) zur wahlfreien Verbindung je eines Kanals eines Eingangs-Kanalbündels (Ekb) mit einem Kanal eines Ausgangs-Kanalbündels (Akb),
**dadurch gekennzeichnet,**
daß im Koppelnetz (K) Einrichtungen mit Kopiermöglichkeit vorhanden sind, durch die wahlweise der Inhalt eines beliebigen, von einem Kanalbündel (Ekb) kommenden Kanals (Nk) kopiert und zu mindestens einem Ausgang des Koppelnetzes geführt werden kann und daß an diesem Ausgang eine Einzelkanalprüfeinrichtung (EA64) angeordnet ist.

3. Netzknoten nach Anspruch 2, dadurch gekennzeichnet, daß das Koppelnetz auch Ein- und Ausgänge und diesen zugeordnete Ein- und Ausgangseinheiten (EA64) für Einzelkanäle aufweist, daß die Eingangsteile der Ein- und Ausgangseinheiten (EA64) für Einzelkanäle Einzelkanalprüfeinrichtungen aufweisen, daß eine solche Ein- und Ausgangseinheit zwischen Ein- und Ausgang kurzgeschlossen ist und daß der Ausgangsteil dieser Ein- und Ausgangseinheit an demjenigen Ausgang des Koppelnetzes angeschlossen ist, zu dem hin die zum Zwecke der Einzelkanalprüfung kopierten Kanäle (Pk) geführt werden.

## Claims

1. A method of testing a channel (Nk) which arrives at the input of a network node within a channel group (Ekb) and is switched within the network node independently of the other channels of the channel group,
**characterized in**
that in the network node, copying capability is provided for each channel (Nk) coming from a channel group (Ekb), that the contents of a channel (Nk) to be tested are copied, and that the contents of the copied channel (Pk) are fed to a single-channel tester (EA64) and tested there.

2. A network node having a plurality of inputs fed with one channel group (Ekb) each, a plurality of outputs feeding out one channel group (Akb) each, and a switching network (K) for connecting any channel of an input channel group (Ekb) to any channel of an output channel group (Akb),
**characterized in**
that the switching network (K) comprises devices having copying capability by which the contents of any channel (Nk) coming from a channel group (Ekb) can be copied and routed to at least one output of the switching network, and that a single-channel-tester (EA64) is provided at said output.

3. A network node as claimed in claim 2, characterized in that the switching network also has input-outputs and associated input-output units (EA64) for single channels, that the input portions of the input-output units (EA64) for single channels include single-channel testers, that such an input-output unit is short-circuited between input and output, and that the output portion of said input-output unit is connected to that output of the switching network to which the channels (Pk) copied for single-channel-testing purposes are routed.

## Revendications

1. Procédé de contrôle d'un canal (Nk) parvenant à l'entrée d'un noeud de réseau parmi un faisceau de canaux multiplexé (Ekb) et qui est commuté indépendamment des autres canaux,
caractérisé par le fait
qu'un dispositif de reproduction de chaque canal (Nk) faisant partie du faisceau de canaux multiplexé (Ekb) est prévu à l'intérieur du noeud, que le contenu du canal à contrôler est reproduit et que le contenu de ce canal reproduit (Pk) est acheminé vers un dispositif de contrôle individuel de canaux (EA64) pour y être contrôlé.

2. Noeud de réseau comportant une multitude d'entrées pour chaque faisceau de canaux multiplexé (Ebk), une multitude de sorties pour chaque faisceau de canaux multiplexé (Akb) et un réseau de couplage (K) pour une commutation au choix d'un canal d'un faisceau de canaux à l'entrée (Ekb) avec un canal d'un faisceau de canaux à la sortie (Abk).
caractérisé par le fait
que le réseau de couplage (K) dispose de moyens de reproduction permettant de reproduire au choix le contenu d'un canal (Nk) issu d'un faisceau de canaux (Ekb) et de l'acheminer vers au moins une sortie du réseau de couplage et que cette sortie est pourvue d'un dispositif de contrôle individuel des canaux (EA64).

3. Noeud de réseau selon la revendication 2
caractérisé par le fait
que le réseau de couplage dispose également d'entrées et de sorties ainsi que d'unités d'entrée et de sortie (EA64) de canaux individuels qui leur sont attribuées, que les entrées des unités d'entrée et de sortie (EA64) de canaux individuels sont pourvues de dispositifs de contrôle des canaux individuels, que l'entrée et la sortie d'une telle unité d'entrée et de sortie sont court-circuitées et que la sortie d'une telle unité d'entrée et de sortie est raccordée à la sortie correspondante du réseau de couplage qui reçoit les canaux reproduits (Pk) pour permettre le contrôle individuel des canaux.
